# EUROPÄISCHE PATENTANMELDUNG

(11) **EP 1 335 468 A1**
(43) Veröffentlichungstag der Anmeldung: **13.08.2003**
(21) Anmeldenummer: 02405105.4
(22) Anmeldetag: 12.02.2002
(51) Int. Cl.: H02H 7/26

(54) **Kommunikation zwischen Fernauslösegeräten**

(71) Anmelder: ABB Schweiz AG, 5400 Baden (CH)
(72) Erfinder: Busslinger, Bruno, 5412 Gebenstorf (CH)
(74) Vertreter: ABB Patent Attorneys

(57) **Zusammenfassung**

In einem Verfahren und Kommunikationsbus zur Kommunikation zwischen Fernauslösegeräten, sind in jedem von mindestens zwei Fernauslösegeräten (10,20) je eine Mastereinheit (1;2) zum Senden von Daten auf eine Sendeleitung (3a;3b) und mindestens eine Slaveeinheit (11,12;21) zum Empfang von Daten von der Sendeleitung (3a;3b) ausgebildet, und ist die Mastereinheit (1;2) zum Empfang von Daten von einer Empfangsleitung (4a;4b) und die mindestens eine Slaveeinheit (11,12;21) zum Senden von Daten auf der Empfangsleitung (3a;3b) ausgebildet.

Die Sendeleitungen (3a,3b) von mehreren Fernauslösegeräten (10,20) sind zu einer gemeinsamen Sendeleitung (3) verbunden, die Empfangsleitungen (4a,4b) sind zu einer gemeinsamen Empfangsleitung (4) verbunden, und es sind wahlweise Signale von der gemeinsamen Sendeleitung (3) an die gemeinsame Empfangsleitung (4) übertragbar.

Dadurch wird es möglich, nicht nur Signale zwischen Mastereinheiten (1,2) und Slaveeinheiten (11,12,21) auszutauschen, sondern auch Signale von einer ersten Mastereinheit (1) über die gemeinsame Sendeleitung (3) und die gemeinsame Empfangsleitung (4) auf eine zweite Mastereinheit (2) zu übertragen und umgekehrt.

## Beschreibung

### Technisches Gebiet

Die Erfindung bezieht sich auf das Gebiet der Schutztechnik für Hoch- und Mittelspannungsnetze. Sie bezieht sich auf ein Verfahren und einen Kommunikationsbus zur Kommunikation zwischen Fernauslösegeräten gemäss dem Oberbegriff der Patentansprüche 1 und 5.

### Stand der Technik

Fernauslösegeräte oder Schutzsignalübertragungsgeräte dienen zur Übertragung von Schutz- oder Schaltbefehlen für einen Distanzschutz in elektrische Hoch- und Mittelspannungsnetzen sowie -anlagen. Schutzbefehle bewirken beispielsweise eine direkte oder indirekte Öffnung eines Schutzschalters und dadurch eine elektrische Abtrennung eines Teiles der Netzes. Andere Schutzbefehle bewirken umgekehrt eine Blockierung der Öffnung eines Schutzschalters. Ein Fernauslösegerät besteht aus einer Prozessorkarte und mindestens einer Ein/Ausgabekarte, im Folgenden Relaykarte genannt. Jede Relaykarte überträgt einen Schutzbefehl zum Schalten oder Blockieren eines Schutzschalters. Üblicherweise wird bei einer Kommunikation zwischen Prozessorkarte und Relaykarte für jeden Schutzbefehl eine eigene Leitung verwendet. Es ist stattdessen ein Einsatz eines seriellen Busses erwünscht, wobei sich jedoch das folgende Problem stellt:

Zur Kommunikation zwischen der Prozessorkarte und den Relaykarten werde ein "Time Division Multiplex" (TDM)-Bus verwendet. Dieser TDM-Bus weist unter anderem eine Sendeleitung zur Datenübertragung von der Prozessorkarte an die Relaykarten und eine Empfangsleitung zur Datenübertragung von den Relaykarten an die Prozessorkarte auf. Die Prozessorkarte kann nur Daten auf die Sendeleitung schreiben und nur Daten auf der Empfangsleitung empfangen. Umgekehrt können alle Relaykarten nur Daten auf die Empfangsleitung schreiben und nur Daten auf der Sendeleitung empfangen. Jeder Relaykarte sind Zeitschlitze zugeordnet, während welchen die Relaykarte Daten empfangen und/oder schreiben darf. Müssen Daten von der Prozessorkarte an eine bestimmte Relaykarte übermittelt werden, so schreibt die Prozessorkarte diese innerhalb der Zeitschlitze, in welchen die entsprechende Relaykarte empfangsberechtigt ist, auf die Sendeleitung. Umgekehrt kann die Prozessorkarte beim Empfang von Daten auf der Empfangsleitung die Daten entsprechend dem Zeitschlitz, in welchem sie empfangen wurden, einer Relaykarte zuordnen.

In bestimmten Anwendungen ist es erforderlich, dass mehrere Fernauslösegeräte miteinander kommunizieren. Dazu ist ein zusätzliches Kommunikationsmittel, beispielsweise ein Analogbus, zwischen den Prozessorkarten dieser Fernauslösegeräte erforderlich. Dies bedingt einen zusätzlichen gerätetechnischen Aufwand.

### Darstellung der Erfindung

Es ist deshalb Aufgabe der Erfindung, ein Verfahren und einen Kommunikationsbus zur Kommunikation zwischen Fernauslösegeräten der eingangs genannten Art zu schaffen, welche mit geringem Aufwand realisierbar sind.

Diese Aufgabe lösen ein Verfahren und ein Kommunikationsbus zur Kommunikation zwischen Fernauslösegeräten mit den Merkmalen der Patentansprüche 1 und 5.

In der erfindungsgemässen Verfahren und Kommunikationsbus zur Kommunikation zwischen Fernauslösegeräten sind also Sendeleitungen von mehreren Fernauslösegeräten miteinander zu einer gemeinsamen Sendeleitung verbunden, sind Empfangsleitungen miteinander zu einer gemeinsamen Empfangsleitung verbunden, und sind wahlweise Signale von der gemeinsamen Sendeleitung an die gemeinsame Empfangsleitung übertragbar.

Dadurch wird es möglich,
- dass in einem ersten Betriebszustand keine Verbindung zwischen der gemeinsamen Sendeleitung und der gemeinsamen Empfangsleitung besteht, und damit also Signale von einer Mastereinheit an eine Slaveeinheit und umgekehrt wie bisher bekannt übertragbar sind, und
- dass in einem zweiten Betriebszustand Signale von der gemeinsamen Sendeleitung auf die gemeinsame Empfangsleitung übertragen werden, und damit also Signale von einer ersten Mastereinheit über die gemeinsame Sendeleitung und die gemeinsame Empfangsleitung auf die zweite Mastereinheit übertragbar sind.

Um die Kommunikation zwischen mehreren Fernauslösegeräten respektive ihren Mastereinheiten zu ermöglichen, müssen also nur die bereits bestehenden Kommunikationsbusse miteinander verbunden werden und muss ein ein- und ausschaltbares Übertragungsmittel zwischen die Sendeund Empfangsleitung geschaltet werden.

In einer bevorzugten Ausführungsform der Erfindung ist das Übertragungsmittel durch die Slaveeinheiten ein- und ausschaltbar.

Weitere bevorzugte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: schematisch eine Kommunikationsstruktur zweier unverbundener Fernauslösegeräte; und
- Figur 2: schematisch eine Kommunikationsstruktur zweier erfindungsgemäss miteinander verbundener Fernauslösegeräte.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

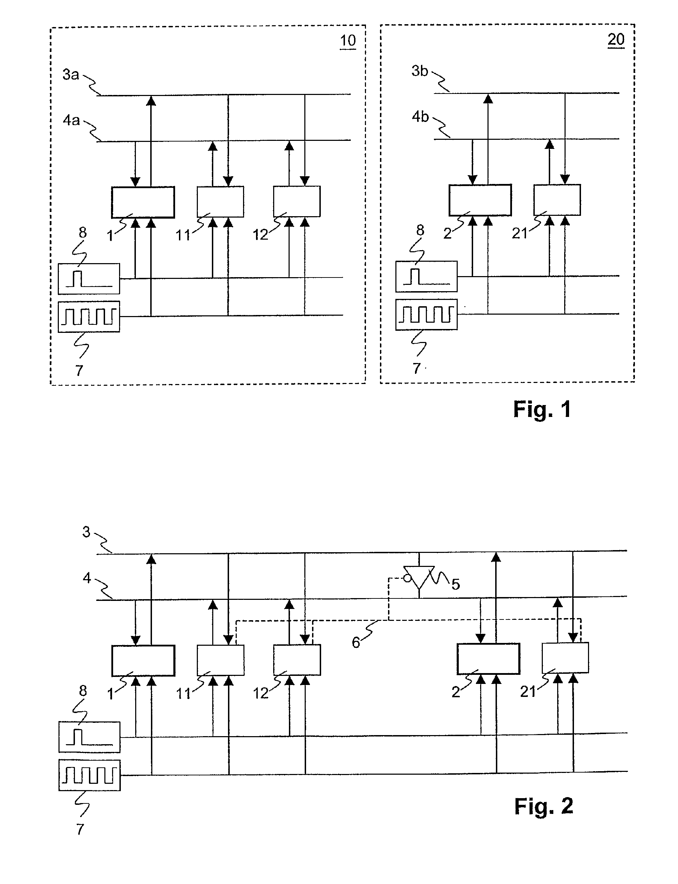

Figur 1 zeigt schematisch eine Kommunikationsstruktur zweier Fernauslösegeräte. Ein erstes Fernauslösegerät 10 weist eine erste Prozessorkarte 1, eine erste Relaykarte 11 und eine zweite Relaykarte 12 auf, welche wie eingangs beschrieben über eine erste Sendeleitung 3a und eine erste Empfangsleitung 4a miteinander kommunizieren. Die Kommunikation wird mittels eines seriellen Clocks 7 und einer Rahmensynchronisation 8 synchronisiert, deren Signale typischerweise in einer separaten Karte erzeugt werden und an die erste Prozessorkarte 1 und jede der Relaykarten übermittelt werden. Die erste Sendeleitung 3a, die erste Empfangsleitung 4a und die Signale des seriellen Clocks 7 und der Rahmensynchronisation 8 bilden zusammen einen TDM-Bus. Daten werden als serielle Signale codiert und in einzelne Datenrahmen ("Frames") verpackt übertragen.

Entsprechend weist ein zweites Fernauslösegerät 20 eine zweite Prozessorkarte 2, eine dritte Relaykarte 21, eine zweite Sendeleitung 3b, eine zweite Empfangsleitung 4b sowie Leitungen für die beiden Synchronisationssignale 7,8 auf.

In jedem der Fernauslösegeräte 10,20 funktionieren die Prozessorkarten 1,2 als Mastereinheiten und die Relaykarten 11,12,21 als Slaveeinheiten.

Figur 2 zeigt schematisch eine Kommunikationsstruktur zweier erfindungsgemäss miteinander verbundener Fernauslösegeräte. Darin sind die erste Sendeleitung 3a und die zweite Sendeleitung 3b zu einer gemeinsamen Sendeleitung 3 verbunden und sind die erste Empfangsleitung 4a und die zweite Empfangsleitung 4b zu einer gemeinsamen Empfangsleitung 4 verbunden. Zwischen der gemeinsamen Sendeleitung 3 und der gemeinsamen Empfangsleitung 4 ist ein Datenpuffer 5 oder Übertragungsmittel angeordnet. Dieser Datenpuffer 5 ist über eine Steuerleitung 6 ein- und ausschaltbar. In einem ersten, ausgeschalteten Betriebszustand werden keine Signale von der gemeinsamen Sendeleitung 3 an die gemeinsame Empfangsleitung 4 übertragen. In einem zweiten, eingeschalteten Betriebszustand werden Signale übertragen.

In einer anderen Ausführungsform der Erfindung ist das Übertragungsmittel einfach ein ein- und ausschaltbarer Verstärker oder eine schaltbare elektrische Verbindung, welche die Signale auf der gemeinsamen Sendeleitung 3 wahlweise an die gemeinsame Empfangsleitung 4 übertragen oder nicht.

Im ersten Betriebszustand kommunizieren Prozessorkarten 1,2 und Relaykarten 11,12,21 in bisher bekannter Weise. Signale sind von einer der Prozessorkarten 1,2 über die gemeinsame Sendeleitung 3 an eine der Relaykarten 11,12,21 und Signale von einer der Relaykarten 11,12,21 an eine der Prozessorkarten 1,2 übertragbar. Es muss dazu nur jeder Relaykarte 11,12,21 ein eigener Zeitschlitz zugeordnet werden, in welchem sie zum Empfang von Daten von der gemeinsamen Sendeleitung 3 bereit ist, und ein eigener Zeitschlitz, in welchem sie Daten auf der gemeinsamen Empfangsleitung 4 senden darf. Diese zwei Zeitschlitze dürfen, müssen aber nicht dieselben sein, da zum Senden und Empfangen eigene Leitungen 3,4 vorhanden sind.

Es ist im ersten Betriebszustand auch möglich, Daten zwischen beispielsweise der ersten Prozessorkarte 1 des ersten Fernauslösegerät 10 und der dritten Relaykarte 21 des zweiten Fernauslösegeräts 20 auszutauschen und umgekehrt. Es ist jedoch nicht möglich, Daten zwischen der ersten Prozessorkarte 1 und der zweiten Prozessorkarte 2 direkt auszutauschen.

Im zweiten Betriebszustand bewirkt der eingeschaltete Datenpuffer 5 eine Übertragung von Signalen von der gemeinsamen Sendeleitung 3 auf die gemeinsame Empfangsleitung 4. Damit sind Signale von der ersten Prozessorkarte 1 über die gemeinsame Sendeleitung 3, den Datenpuffer 5 und die gemeinsame Empfangsleitung 4 auf die zweite Prozessorkarte 2 übertragbar. Die Übertragung von Signalen von der zweiten zur ersten Prozessorkarte erfolgt in analoger Weise.

Zur Koordination der Kommunikation zwischen den Prozessorkarten 1,2 wird jeder der Prozessorkarten 1,2 ein eigener Zeitschlitz zugeordnet, in welchem sie zum Empfang von Daten bereit ist. Bei Verwendung von mehr als zwei Prozessorkarten 1,2 wird entweder jeder Kombination von Prozessorkarten, ein eigenes Paar von Zeitschlitzen zugeordnet, oder es werden bekannte Kollisionsdetektionsmechanismen verwendet.

Die Umschaltung zwischen dem ersten und zweiten Betriebszustand wird in einer bevorzugten Variante der Erfindung durch die Relaykarten 11,12,21 über die Steuerleitung 6 gesteuert. Die Steuerleitung 6 wird, sofern sie nicht angesteuert wird, durch einen pull-down-Widerstand auf Massenpotential gezogen. In diesem Zustand ist der Datenpuffer 5 eingeschaltet und überträgt Signale. Die Steuerleitung 6 kann durch jede der Relaykarten auf ein aktives Niveau hochgezogen respektive angesteuert werden. Dadurch wird der Datenpuffer 5 ausgeschaltet und überträgt keine Signale. Die Steuerleitung 6 wird vorzugsweise durch eine Relaykarte 11,12,21 immer dann angesteuert, wenn ein Zeitschlitz der entsprechenden Relaykarte 11,12,21 auftritt, insbesondere während jenes Zeitschlitzes, in welchem die Relaykarte 11,12,21 empfangsbereit ist. Dies hat zur Folge, dass in einem solchen Zeitschlitz beispielsweise die erste Prozessorkarte 1 der ersten Relaykarte 11 Signale senden und gleichzeitig von der ersten Relaykarte 11 Signale empfangen kann.

Ist beispielsweise die erste Relaykarte 11 nicht eingesteckt oder ist sie defekt, so wird im entsprechenden Zeitschlitz die Steuerleitung 6 nicht angesteuert und somit der Datenpuffer 5 nicht ausgeschaltet. Dies hat zur Folge, dass Signale der ersten Prozessorkarte 1 an die erste Relaykarte 11 über den Datenpuffer 5 und die Empfangsleitung 4 wieder an die erste Prozessorkarte 1 gelangen. Auf diese Weise kann eine Prozessorkarte 1,2 die Abwesenheit respektive den Defekt der ersten Relaykarte 11 ermitteln.

Es wird also erfindungsgemäss mit sehr kleinem Aufwand ermöglicht, dass sowohl wie bisher eine Kommunikation zwischen Prozessorkarten 1,2 und Relaykarten 11,12,21 als auch eine Kommunikation zwischen Prozessorkarten 1,2 stattfindet.

Bezugszeichenliste
- 1: erste Prozessorkarte
- 10: erstes Fernauslösegerät
- 11: erste Relaykarte
- 12: zweite Relaykarte
- 2: zweite Prozessorkarte
- 20: zweites Fernauslösegerät
- 21: dritte Relaykarte
- 3: gemeinsame Sendeleitung
- 3a: erste Sendeleitung
- 3b: zweite Sendeleitung
- 4: gemeinsame Empfangsleitung
- 4a: erste Empfangsleitung
- 4b: zweite Empfangsleitung
- 5: Übertragungsmittel, Datenbuffer
- 6: Steuerleitung
- 7: serieller Clock
- 8: Rahmensynchronisation

## Patentansprüche

1. Verfahren zur Kommunikation zwischen Fernauslösegeräten, wobei in jedem von mindestens zwei Fernauslösegeräten (10,20) je eine Mastereinheit (1;2) zum Senden von Daten auf eine Sendeleitung (3a;3b) und mindestens eine Slaveeinheit (11,12;21) zum Empfang von Daten von der Sendeleitung (3a;3b) ausgebildet sind, und die Mastereinheit (1 ;2) zum Empfang von Daten von einer Empfangsleitung (4a;4b) und die mindestens eine Slaveeinheit (11,12;21) zum Senden von Daten auf der Empfangsleitung (3a;3b) ausgebildet sind,
**dadurch gekennzeichnet,**
**dass** die Sendeleitungen (3a,3b) der mindestens zwei Fernauslösegeräte miteinander verbunden sind und eine gemeinsame Sendeleitung (3) bilden, die Empfangsleitungen (4a,4b) der mindestens zwei Fernauslösegeräte miteinander verbunden sind und eine gemeinsame Empfangsleitung (4) bilden, und
**dass** in einem ersten Betriebszustand keine Verbindung zwischen der gemeinsamen Sendeleitung (3) und der gemeinsamen Empfangsleitung besteht, und dass Signale von einer der Mastereinheiten (1,2) über die gemeinsame Sendeleitung (3) an eine der Slaveeinheiten (11,12,21) und Signale von einer der Slaveeinheiten (11,12,21) über die gemeinsame Empfangsleitung (4) an eine der Mastereinheiten (1,2) übertragen werden, und
**dass** in einem zweiten Betriebszustand Signale von der gemeinsamen Sendeleitung (3) auf die gemeinsame Empfangsleitung (4) übertragen werden, und dass Signale von einer ersten Mastereinheit (1) über die gemeinsame Sendeleitung (3) und die gemeinsame Empfangsleitung (4) auf die zweite Mastereinheit (2) übertragen werden.

2. Verfahren gemäss Anspruch 1, **dadurch gekennzeichnet, dass** eine Umschaltung zwischen dem ersten und zweiten Betriebszustand durch die Slaveeinheiten (11,12,21) gesteuert wird.

3. Verfahren gemäss Anspruch 1, **dadurch gekennzeichnet, dass** jede der Slaveeinheiten (11,12,21) die Umschaltung vom ersten in den zweiten Betriebszustand während eines Zeitschlitzes veranlasst, in dem die betreffende Slaveeinheit (11,12,21) Daten empfangen kann.

4. Verfahren gemäss Anspruch 1, **dadurch gekennzeichnet, dass** Daten auf der gemeinsamen Sendeleitung (3) und der gemeinsamen Empfangsleitung (4) seriell übertragen werden.

5. Kommunikationsbus zur Kommunikation zwischen Fernauslösegeräten, wobei in jedem von mindestens zwei Fernauslösegeräten (10,20) je eine Mastereinheit (1;2) zum Senden von Daten auf eine Sendeleitung (3a;3b) und mindestens eine Slaveeinheit (11,12;21) zum Empfang von Daten von der Sendeleitung (3a;3b) ausgebildet sind, und die Mastereinheit (1;2) zum Empfang von Daten von einer Empfangsleitung (4a;4b) und die mindestens eine Slaveeinheit (11,12;21) zum Senden von Daten auf der Empfangsleitung (3a;3b) ausgebildet sind, **dadurch gekennzeichnet,**
**dass** die Sendeleitungen (3a,3b) der mindestens zwei Fernauslösegeräte miteinander verbunden sind und eine gemeinsame Sendeleitung (3) des Kommunikationsbusses bilden, die Empfangsleitungen (4a,4b) der mindestens zwei Fernauslösegeräte miteinander verbunden sind und eine gemeinsame Empfangsleitung (4) des Kommunikationsbusses bilden, und
**dass** ein ein- und ausschaltbares Übertragungsmittel (5) zur Übertragung von Daten von der gemeinsamen Sendeleitung (3) an die gemeinsame Empfangsleitung (4) zwischen diesen Leitungen (3,4) angeordnet ist.

6. Kommunikationsbus nach Anspruch 5, **dadurch gekennzeichnet, dass** die Slaveeinheiten (11,12,21) über eine Steuerleitung (6) zum Ein- und Ausschalten des Übertragungsmittels (5) mit dem Übertragungsmittel (5) wirkverbunden sind.

7. Kommunikationsbus nach Anspruch 6, **dadurch gekennzeichnet, dass** jede der Slaveeinheiten (11,12,21) zum Ausschalten des Übertragungsmittels (5) während eines Zeitschlitzes, in dem die betreffende Slaveeinheit (11,12,21) Daten empfangen kann, ausgebildet ist.
